(19) Europäisches Patentamt
European Patent Office
Office européen des brevets

(11) **EP 0 759 253 B1**

(12) **EUROPEAN PATENT SPECIFICATION**

(45) Date of publication and mention
of the grant of the patent:
**15.12.1999 Bulletin 1999/50**

(21) Application number: **95916004.5**

(22) Date of filing: **11.05.1995**

(51) Int Cl.[6]: **H04N 9/77**

(86) International application number:
**PCT/IB95/00353**

(87) International publication number:
**WO 95/31877 (23.11.1995 Gazette 1995/50)**

(54) **CROSS-LUMINANCE REDUCTION**

REDUKTION DES LEUCHTDICHTEÜBERSPRECHENS

REDUCTION DE LA DIAPHOTIE DE LUMINANCE

(84) Designated Contracting States:
**AT BE CH DE DK ES FR GB GR IE IT LI LU MC NL PT SE**

(30) Priority: **13.05.1994 EP 94201361**
**28.09.1994 EP 94202804**

(43) Date of publication of application:
**26.02.1997 Bulletin 1997/09**

(73) Proprietor: **Koninklijke Philips Electronics N.V.**
**5621 BA Eindhoven (NL)**

(72) Inventors:
• **ROZENDAAL, Leendert, Teunis**
**NL-5621 BA Eindhoven (NL)**
• **POOT, Teunis**
**NL-5621 BA Eindhoven (NL)**
• **TICHELAAR, Johannes, Ijzebrand**
**NL-5621 BA Eindhoven (NL)**

(74) Representative:
**Steenbeek, Leonardus Johannes et al**
**INTERNATIONAAL OCTROOIBUREAU B.V.,**
**Prof. Holstlaan 6**
**5656 AA Eindhoven (NL)**

**Description**

The invention relates to a method and apparatus for a color-dependent cross-luminance reduction.

Such a color-dependent cross-luminance reduction is known from DE-C-1,908,897, in which a luminance notch filter is controlled by a signal which is obtained from the video signal by band-pass filtering, thresholding and rectification. The smaller the amplitude of the color subcarrier amplitude dependent control signal, the smaller the reduction of high-frequency signal components in the luminance channel is. The prior art method shows the disadvantage that also cross-color components will result in a luminance notch filtering operation, which comes down to an unnecessary loss of quality of the luminance signal.

US-A-4,638,351 discloses an adaptive filter for use in color video signal processing. A filter is disclosed for adaptively filtering a PAL or NTSC luminance signal so as to attenuate the high frequency portion of the luminance band, in which the chrominance information lies, when movement is detected. This reduces cross-color in the reproduced picture. Movement is detected by comparing the undelayed luminance signal with this signal delayed by an integral number of lines corresponding substantially to one field or one picture. The filter may precede a coder or follow a decoder.

It is, *inter alia,* an object of the invention to furnish a simple color-dependent cross-luminance reduction in which the above-mentioned disadvantage has been mitigated. To this end, a first aspect of the invention provides an color-dependent cross luminance reduction apparatus as defined in claim 1. A second aspect of the invention provides a color-dependent cross luminance reduction method as defined in claim 11. A third aspect of the invention provides a television receiver as defined in claim 12. Advantageous embodiments are defined in the subclaims.

According to the invention, in a color-dependent cross-luminance reduction, intra-frame averaged chrominance signal components are furnished in response to chrominance signal components. Subsequently, a cross-luminance reduction filter control signal is furnished in dependence on a saturation signal generated from the intra-frame averaged chrominance signal components, and the luminance signal is filtered in dependence on the cross-luminance reduction filter control signal to produce an output luminance signal. As the intra-frame averaged chrominance signal components are largely free from cross-color, the prior art disadvantage has been mitigated.

These and other aspects of the invention will be apparent from and elucidated with reference to the embodiments described hereinafter.

In the drawings:

Fig. 1 shows a basic block diagram of a cross-luminance reduction apparatus in accordance with the present invention;
Fig. 2 shows two possible curves for attenuating the high frequency part of the luminance signal in dependence on a chrominance amplitude;
Fig. 3 shows a prior art chrominance-motion-adaptive luminance filter;
Fig. 4 shows an embodiment of a chrominance-motion-adaptive luminance filter in accordance with the present invention;
Fig. 5 shows an intra-frame averaging circuit;
Fig. 6 shows an inter-frame difference calculating circuit;
Fig. 7 shows a basic block diagram of a chrominance-motion-adaptive luminance filter in accordance with a second embodiment of the present invention;
Fig. 8 shows a first modification of the block diagram of Fig. 7; and
Fig. 9 shows a second modification of the block diagram of Fig. 7.

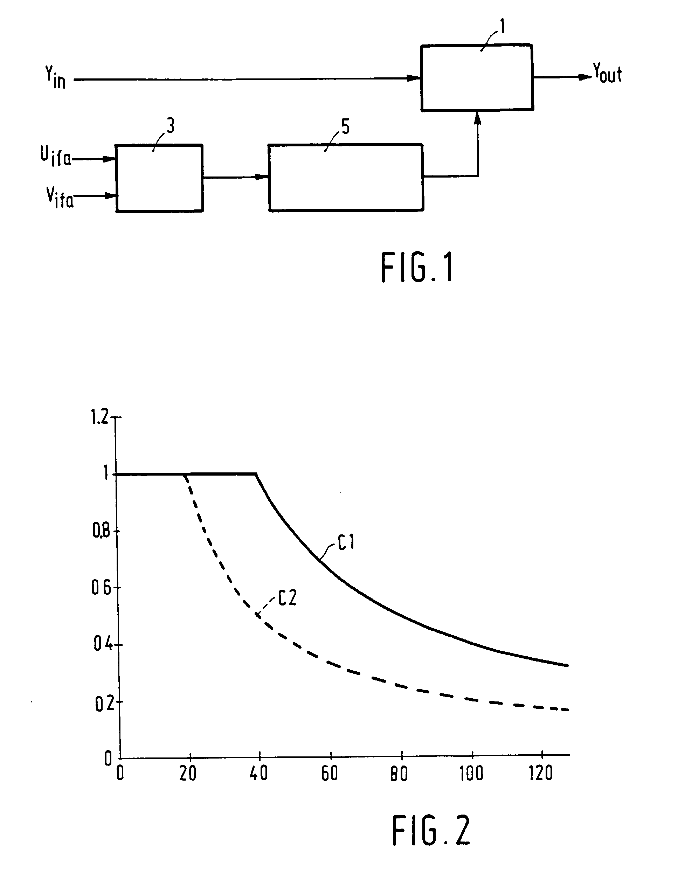

In the basic block diagram of Fig. 1, an input luminance signal $Y_{in}$ is applied to a high-frequency luminance reduction filter 1 which produces an output luminance signal $Y_{out}$. Intra-frame averaged chrominance signals $U_{ifa}$ and $V_{ifa}$ are applied to a saturation detector 3. In one embodiment, the saturation detector 3 determines an amplitude of a chrominance vector having the intra-frame averaged chrominance signals $0.71*U_{ifa}$ and $V_{ifa}$ for its components. Hereinafter, the factor 0.71 will be neglected. The saturation detector output signal is applied to a cross-luminance reduction filter control signal generator 5. Preferably, the cross-luminance reduction filter control signal generator 5 generates a high-frequency luminance attenuation factor in accordance with a 1/x characteristic above a certain threshold value as demonstrated, for example, by the curves C1, C2 shown in Fig. 2. In Fig. 2, the horizontal axis indicates the chrominance amplitude, while the vertical axis indicates the high-frequency luminance attenuation factor.

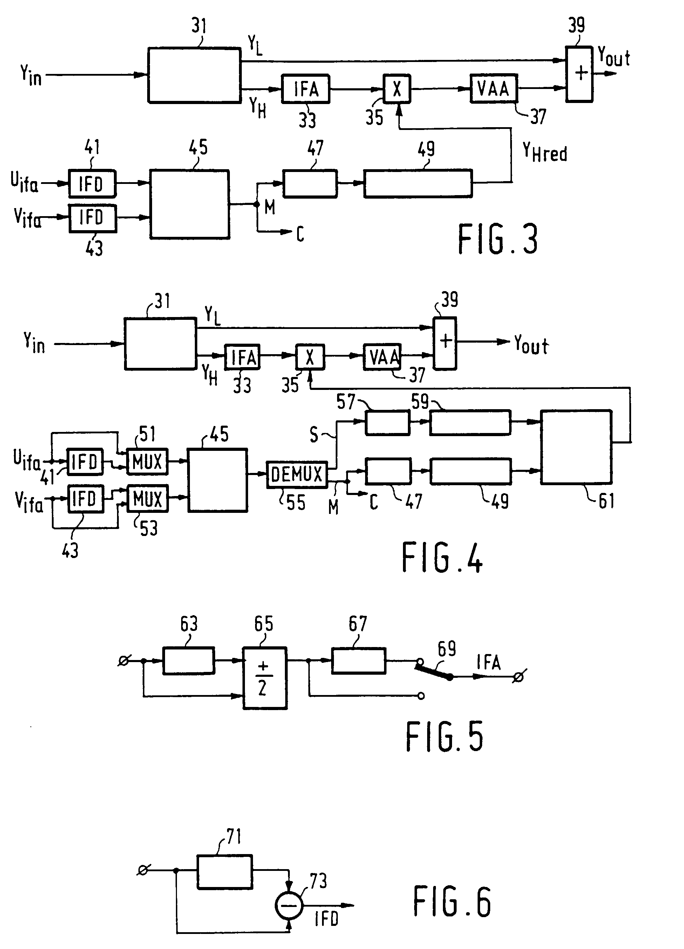

Fig. 3 shows a prior art motion-adaptive luminance filter. This filter is used in the PALplus television system for attenuating the high-frequency part of the luminance signal in dependence on motion determined in the chrominance components. With a large amount of chrominance motion, no high-frequency luminance signals will be left and from the luminance signal only a low-frequency luminance part (up to 3 MHz) will be output. In this manner, it is ensured that also when motion is present in the chrominance components, a cross-luminance free luminance signal (be it low-pass filtered) is produced. The remainder of the spectrum (above 3 MHz) is used entirely for modulated chrominance (without temporal averaging), whereby visible chrominance judder for moving saturated colored objects is prevented and the transmitted signal is free from cross-color and cross-luminance.

An input luminance signal $Y_{in}$ is applied to a split filter 31 which produces a low-frequency luminance signal $Y_L$ and a high-frequency luminance signal $Y_H$. The high-frequency luminance signal $Y_H$ is applied to a series connection of an intra-frame average filter 33, an attenuator 35, and a vertical anti-alias filter 37. The output signal of the filter 37 and the low-frequency luminance signal $Y_L$ are combined by an adder 39 to produce a luminance output signal $Y_{out}$.

A control signal for the attenuator 35 is obtained as follows. Intra-frame averaged chrominance signals $U_{ifa}$ and $V_{ifa}$ are applied to respective inter-frame difference calculating circuits 41 and 43 to obtain signals relating to motion in the intra-frame averaged chrominance signals $U_{ifa}$ and $V_{ifa}$. These chrominance component motion signals are applied to a length calculation circuit 45 which essentially calculates the length of a vector having the chrominance component motion signals for its components. Preferably, the length calculation circuit 45 operates in accordance with our European patent EP-B-0,597,532 (Atty. docket PHN 14.266). The motion signal M produced by the length calculation circuit 45 is applied to a chrominance processing section C (not shown) and to a series connection of an upsampler 47 and a conversion circuit 49 to obtain the control signal for the attenuator 35. As the chrominance signals have been sampled at a sampling rate which is lower than the sampling rate used for the luminance signal, the upsampler 47 is required to produce a luminance processing control signal on the basis of chrominance signals. The conversion circuit 49 calculates a attenuation control signal having, for example, five-levels, on the basis of the upsampled motion signal.

Fig. 4 shows an embodiment of a chrominance-motion-adaptive luminance filter in accordance with the present invention. In this embodiment, many elements of the circuit of Fig. 3 are used so that only little additional hardware is required to implement the present invention. It appeared to be necessary to augment the circuit of Fig. 3, which was already supposed to produce a cross-luminance-free luminance signal both in the presence and in the absence of motion in chrominance components, by additional elements to reduce cross-luminance in view of the following observations.

In the PALplus system, motion-adaptive chrominance and high-frequency luminance processing operations are used for an improved luminance-chrominance separation. These operations are based on a combination of high-frequency luminance and chrominance signals before the PAL encoding in such a way, that in a PALplus decoder, these signals can be separated again by combining two image lines lying 312 lines apart. In this way, it becomes possible to transfer high-frequency luminance signals and both chrominance components in the same frequency band, without the usual interferences occurring in PAL, viz. cross-color and cross-luminance.

For a perfect extinction of the cross-components it is essential that the image lines which are to be combined, are sampled at exactly the same time instants. If the sampling grids for the both lines do not correspond, cross-color and cross-luminance will occur again, as the summation of two sine-signals in anti-phase will only result in a zero signal if their phases match exactly. In case of a phase mismatch, the summation will with regard to the luminance signal result in a sine signal having an amplitude which depends on the amplitude of the modulated color and on the phase error, thereby producing cross-luminance. Consequently, for a good suppression of cross-luminance, a good clock stability is required. Experiments have shown, that the clock/synchronization concepts commonly used in current television receivers are insufficiently precise, so that a cross-luminance residue might be visible in areas with saturated colors. It appeared that in view of the smaller bandwidth of the chrominance signals, no disturbing cross-color residue was caused by the imperfectness of nowadays clock / synchronization concepts.

In accordance with an aspect of the present invention, residual cross-luminance components are reduced in those areas of the image in which saturated colors occur and where thus cross-luminance is likely to appear, without affecting the remainder of the image. In a chrominance-motion-adaptive luminance filter of the type shown in Fig. 3, this can be achieved with very little additional hardware as is demonstrated in Fig. 4. In addition to the elements shown in Fig. 3, multiplexers 51, 53 are inserted before the length calculation circuit 45 so as to allow the length calculation circuit 45 to determine a saturation signal S, i.e. the "length" of an intra-frame averaged chrominance component vector in the same way as and in addition to the way in which it determines the "length" of an inter-frame differenced intra-frame averaged chrominance component vector as shown in Fig. 3. A demultiplexer 55 is inserted at the output of the length calculation circuit 45 so as to produce the motion signal M to the circuits 47, 49 and the chrominance processing section C (not shown) in the manner shown in Fig. 3 when the multiplexers 51, 53 have selected the outputs of the inter-frame difference calculating circuits 41, 43, and to produce the saturation signal S when the multiplexers 51, 53 have selected the intra-frame averaged chrominance component input signals $U_{ifa}$ and $V_{ifa}$. The saturation signal S is applied to a series connection of an upsampler 57 and a conversion circuit 59 to obtain a cross-luminance reduction filter control signal for the attenuator 35. A combination circuit 61 combines the control signals from the conversion circuits 49, 59 by, for example, taking the minimum value of both control signals or by multiplying the control signals to each other (assuming that both are between 0 and 1). An output signal of the combination circuit 61 is applied to the attenuator 35 so as to reduce the high-frequency luminance signal both when motion occurs in the chrominance components and when saturated colors occur.

The conversion circuit 59 corresponds to the filter control signal generator 5 of Fig. 1 and will accordingly include a look-up table filled with one of the curves shown in Fig. 2 or with some other function approximating a 1/x curve. It goes without saying that when a relatively good and stable clock is used, a higher threshold value (like the one of curve C1) can be used than when a worse clock is used, in which case the curve C2 having a lower threshold value is more appropriate. The higher the threshold value, the higher the color saturation may be before a reduction of the high-frequency luminance components occurs.

Fig. 5 shows an intra-frame averaging circuit to obtain intra-frame averaged chrominance components $U_{ifa}$ and $V_{ifa}$ from the chrominance components U and V, respectively, and for use as high-frequency luminance intra-frame average filter 33 in Figs. 3 and 4. The circuit input signal is applied to an averager 65 both directly and thru a field (20 ms in PAL) delay 63. An output signal of the averager 65 is applied to one switching contact of a switch 69, while the other switching contact of the switch 69 is coupled to the averager output thru a field delay 67. The switch 69 is operated at the field rate and furnishes an intra-frame averaged (IFA) output signal.

Fig. 6 shows an inter-frame difference calculating circuit for use in Figs. 3 and 4 (circuits 41, 43). The input signal is delayed by a frame (40 ms in PAL) delay 71. A inter-frame difference (IFD) between the input signal and the frame delay output signal is produced by a subtracter 73.

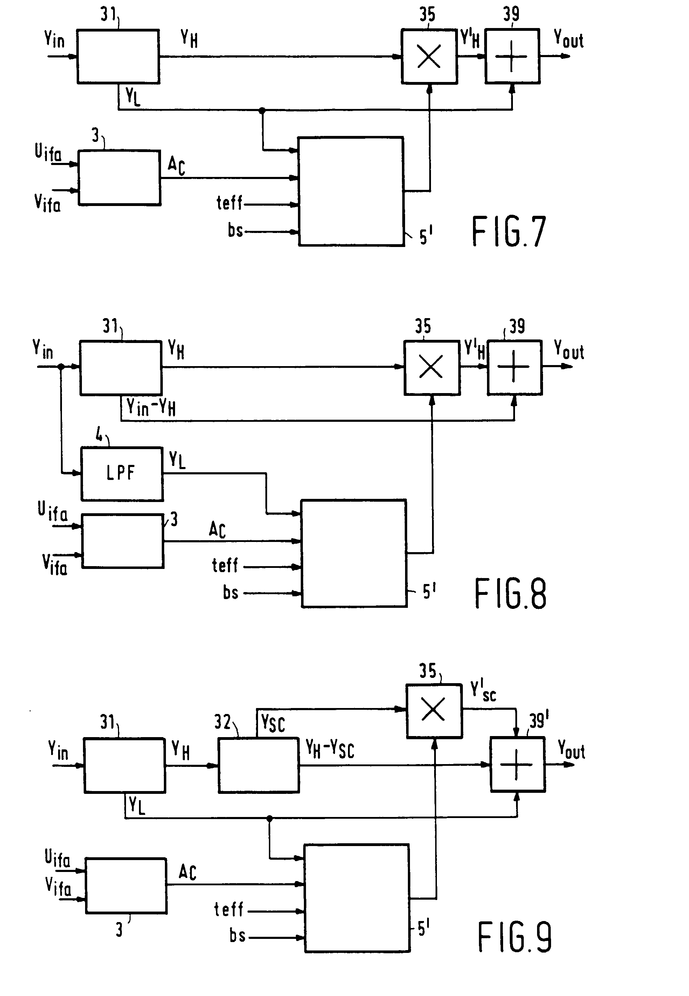

Fig. 7 shows a basic block diagram of a chrominance-motion-adaptive luminance filter in accordance with a second embodiment of the present invention. In this embodiment, the cross-luminance reduction filter control signal generator 5' has been made further dependent on the low-frequency luminance signal $Y_L$. This modification is based on the following recognitions.

It has appeared that residual cross-luminance is more visible on a dark background than on a light background. This can be explained using the Weber-Fechner law, which describes the relationship between the subjectively sensed brightness H and the luminance L (in $cd/m^2$), see the book of B. Wendland, "Fernseh-technik, Band 1: Grundlagen", Heidelberg 1988. The relationship can be described using the following formula:

$$H-Ho = c1 * 1n(L/Lo) \tag{1}$$

where

\* Ho is the subjectively sensed brightness at the lowest luminance level Lo, and
\* cl is a constant.

In equation (1), we do not yet have the relationship between the luminance voltage level Y and the brightness H. Therefore we have to cover the transfer function of the television tube and some luminance related signal processing in the television receiver like blackstretch.

The transfer function of input voltage to luminance of a television tube is given by the following formula:

$$L = c2 * E^{\gamma} \tag{2}$$

where

. L is the luminance,
. c2 is a constant,
. E is the input voltage, and
. $\gamma$ represents the gamma-factor of a television tube. This gamma-factor $\gamma$ typically has a value between 2.2 and 3.

For the sake of simplicity, let's assume that blackstretch can be modelled by the following equation:

$$E_{out} = c3 * E_{in}^{bs} \tag{3}$$

where

. $E_{out}$ is the output voltage level,
. c3 is a constant,
. $E_{in}$ is the input voltage level, and

. bs determines the amount of blackstretch. Note that black is only stretched if bs < 1.

The following expression for the subjectively sensed brightness versus the luminance voltage level results from the cascading of blackstretch (formula 3), the TV tube (formula 2) and the Weber-Fechner law (formula 1).

$$H-Ho = c4 * 1n(Y/Yo) \tag{4}$$

where

. $c4 = bs * \gamma * c1$,
. Ho is the subjectively sensed brightness at the lowest luminance voltage level Yo, and
. Y is the input luminance voltage level.

Note that if no blackstretch is installed in the TV receiver, formula (4) is still valid although its obvious that c4 has to be changed.

The slope of the curve H versus Y in formula (4) can be interpreted as a measure of amplification of small signal luminance to brightness. This measure of small signal amplification is inversely proportional to the luminance voltage level Y:

$$dH/dY = c4/Y \tag{5}$$

The brightness of cross-luminance can be derived using the following reasoning. Let us assume the presence of residual cross-luminance. This can be modelled by a sine wave with a frequency of about 4.43 MHz and a relatively small amplitude which is superimposed on the background luminance and some color signal. The subjectively sensed brightness of the residual cross-luminance is proportional to the measure of color saturation and inversely proportional to the luminance voltage level. The brightness of cross-luminance (XL) is given by the following equation:

$$h_{XL} = c4 * A_c/Y * \sin(\pi * f_{sc} * t_{eff}). \tag{6}$$

where

. $h_{XL}$ is the amplitude of the subjectively sensed brightness of residual cross-luminance XL,
. $A_c = \sqrt{(U^2 + V^2)}$ is the amplitude of the color signal, i.e. the color saturation,
. $f_{sc}$ is the frequency of the color subcarrier (4.43 MHz), and
. $t_{eff}$ is the difference between the effective delay between two consecutive fields in the same frame, and the nominal value of 20 ms.

Note that the delay t between two consecutive fields is a stochastic variable. The effective delay $t_{eff}$ is a function of the rms of the noise although it never falls below a certain minimum which is determined by the imperfect sync IC that is used. The effective delay is not necessarily proportional to the rms noise because of the noise masking effect of cross-luminance.

An optimal strategy in making the subjectively sensed brightness of the cross-luminance independent of the background luminance, is simply to let the cross-luminance brightness' amplitude never exceed a certain threshold Th. This is showed by:

$$h_{XL} \leq Th \Rightarrow c4 * A_c/Y * \sin(\pi * f_{sc} * t_{eff}) \leq Th \tag{7}$$

The threshold Th should be determined subjectively (once). Equation (7) can be simplified by using the following approximation:

$$\sin(\pi * f_{sc} * t_{eff}) \leq \pi * f_{sc} * t_{eff} \tag{8}$$

Using formula (8) in formula (7) leads, with some further simplification, to the following expression:

$$c5 * A_c * t_{eff} / Y < 1 \tag{9}$$

where

- $c5 = \pi * f_{sc} * bs * \gamma / Th$

Optimal control of residual cross-luminance can be achieved by controlling the amplification of high-frequency luminance $Y_H$. Looking at formula (9), $Y_H$ should be controlled as follows:

$$Y_H' = Y_H * min(1, Y / (c5 * A_c * t_{eff}) ) \tag{10}$$

Equation (10) shows how much $Y_H$ has to be reduced in order to control the subjectively sensed brightness of the cross-luminance XL.

Based on the above considerations, those skilled in the art can easily design the cross-luminance reduction filter control signal generator 5' of Fig. 7. The number $A_c$ is furnished by the saturation detector 3. The blackstretch control bs and the value of $t_{eff}$ are also applied to the cross-luminance reduction filter control signal generator 5'. In one practical embodiment, a choice is made between four tables, in dependence on two inputs, one input being the U/V amplitude-related quantity (Ac), and the other input being a noise-related figure ($t_{eff}$).

Fig. 8 shows a first modification of the block diagram of Fig. 7. In this modification, the low-frequency luminance component $Y_L$ has been obtained by a separate low-pass filter 4 from the input luminance signal $Y_{in}$. Hereby, it has become possible to select the cut-off frequency of the low-pass filter 4 different from the split frequency of the frequency split filter 31.

Fig. 9 shows a second modification of the block diagram of Fig. 7. In this modification, the cross-luminance reduction filter 35 affects only a small spectral domain $Y_{sc}$ around the color subcarrier frequency $f_{sc}$. The remainder of the high-frequency component $Y_H$ of the luminance signal Y is thus not disturbed by the cross-luminance reduction filtering. To this end, a second split filter 32 is connected to the high-frequency luminance output of the split filter 31. A first output of the second split filter 32 furnishes the small spectral domain $Y_{sc}$ around the color subcarrier frequency $f_{sc}$ to the cross-luminance reduction filter 35. A second output of the second split filter 32 furnishes the remainder $Y_H$-$Y_{sc}$ of the high-frequency part $Y_H$ of the luminance signal Y. An adder 39' sums the signals from the cross-luminance reduction filter 35, the second output of the second split filter 32, and the low-frequency luminance component $Y_L$, to furnish the output luminance signal $Y_{out}$. A combination of the implementations of Figs. 8 and 9 is also possible but will not be shown here.

It should be noted that the above-mentioned embodiments illustrate rather than limit the invention, and that those skilled in the art will be able to design many alternative embodiments without departing from the scope of the appended claims. For example, it is alternatively possible to use a notch filter in the high-frequency luminance path which is controlled by the control signal from the filter control signal generator 5 of Fig. 1 in a manner corresponding to that shown in Fig. 2 of DE-C-1,908,897 but in dependence on intra-frame averaged chrominance signals in accordance with the teachings of the present invention.

As shown in our previous European patent EP-B-0,597,532 (Atty. docket PHN 14.266), the length calculation circuit 45 approximates an ellipse (indicating the length of the inter-frame differenced intra-frame averaged chrominance "vector") by two straight lines. For the purpose of cross-luminance reduction, an approximation of the ellipse (now indicating the saturation, i.e. the length of the intra-frame averaged chrominance "vector") by a rectangle would also do; the saturation signal S would then be formed by a first constant multiplied by the absolute value of $U_{ifa}$ plus a second constant multiplied by the absolute value of $V_{ifa}$. In that case, instead of two multiplexers 51,53, the length calculation circuit 45 and a demultiplexer 55, two separate paths would be present, one for the motion signal M and another for the saturation signal S, each having its own length calculation circuit. Of course, two separate paths for the motion signal M and the saturation signal S may also be present when the same approximation of the ellipse is used. Further, in each of the separate paths, the combination of a length calculation circuit, upsampler and conversion circuit may be replaced by a series connection of a single look-up table read-only memory (performing the functions of both the length calculation circuit and the conversion circuit) and an upsampler.

In this application, the notion "PALplus" has been used to indicate an extended television transmission system with an improved luminance-chrominance separation. In fact, the known PALplus system also provides a way to transmit a 16:9 aspect ratio picture in a letterbox format so as to achieve compatibility with the current 4:3 aspect ratio PAL television transmission system. This latter aspect of the PALplus system is completely irrelevant to the present invention. If, as a kind of spin-off of the PALplus developments, the PALplus luminance-chrominance separation techniques (sometimes designated by "motion adaptive colour-plus") will be used to achieve an improved transmission of 4:3 aspect ratio PAL signals, the present invention can be applied to reduce any residual cross-luminance components occurring in that adapted 4:3 aspect ratio PAL system as well. The claims should thus not be construed as limited to a true PALplus system with a 16:9 aspect ratio, but cover at least any system using the PALplus luminance-chrominance separation techniques known as a "motion adaptive colour-plus".

While an embodiment in distinct hardware components is shown in the drawings, it goes without saying that the invention may alternatively be implemented by means of a suitably programmed video signal processor. While an application of the invention in a PALplus receiver is very advantageous because little additional hardware is required, use of the invention is not limited to that application. The claim language encompasses at least all the above-mentioned alternative embodiments.

In the claims, any reference signs placed between parentheses shall not be construed as limiting the claim. The invention can be implemented by means of hardware comprising several distinct elements, and by means of a suitably programmed computer.

## Claims

1. A color-dependent cross-luminance reduction apparatus, comprising:

    means (63-69) coupled to receive chrominance signal components (U, V) for furnishing intra-frame averaged chrominance signal components ($U_{ifa}$, $V_{ifa}$);
    saturation detection means (3; 45) coupled to receive said intra-frame averaged chrominance signal components ($U_{ifa}$, $V_{ifa}$) for generating a saturation signal (S);
    means (5; 57-61) for furnishing a cross-luminance reduction filter control signal (YHred) in dependence upon said saturation signal (S); and
    means (1; 31, 35, 39) for filtering a luminance signal ($Y_{in}$) in dependence on said cross-luminance reduction filter control signal (YHred) to produce an output luminance signal ($Y_{out}$).

2. An apparatus as claimed in claim 1, wherein said saturation detection means (45) include means (45) for calculating a length (S) of an intra-frame averaged chrominance vector having said intra-frame averaged chrominance signal components ($U_{ifa}$, $V_{ifa}$) as its components.

3. An apparatus as claimed in claim 1, wherein said cross-luminance reduction filter control signal obtaining means (57-61) include:

    means (41-45, 51, 53) for calculating a chrominance motion-adaptive filter control signal (M) in dependence on said intra-frame averaged chrominance signal components ($U_{ifa}$, $V_{ifa}$); and
    means (47, 49, 57, 59, 61) for combining said saturation signal (S) and said chrominance motion-adaptive filter control signal (M) to obtain said cross-luminance reduction filter control signal (YHred).

4. An apparatus as claimed in claim 3, wherein said means (41-45, 51, 53) for calculating a chrominance motion-adaptive filter control signal (M) include means (41, 43, 51, 53, 45) for calculating a length (M) of a chrominance-difference vector having respective intra-frame differences of said intra-frame averaged chrominance signal components ($U_{ifa}$, $V_{ifa}$) as its components.

5. An apparatus as claimed in claim 1, wherein said luminance filtering means (31, 35, 39) comprise:

    means (31) for separating said luminance signal ($Y_{in}$) into a low-frequency luminance signal ($Y_L$) and a high-frequency luminance signal ($Y_H$);
    means (35) for filtering said high-frequency luminance signal ($Y_H$) in dependence on said cross-luminance reduction filter control signal to obtain a filtered high-frequency luminance signal; and
    means (39) for combining said low-frequency luminance signal ($Y_L$) and said filtered high-frequency luminance signal to produce an output luminance signal ($Y_{out}$).

6. An apparatus as claimed in claim 5, wherein said high-frequency luminance signal filtering means (35) comprise means (35) for attenuating said high-frequency luminance signal ($Y_H$) in dependence on said cross-luminance reduction filter control signal.

7. An apparatus as claimed in claim 1, wherein said cross-luminance reduction filter control signal further depends on a low-frequency component $Y_L$ of said luminance signal Y.

8. An apparatus as claimed in claim 1, wherein said cross-luminance reduction filter control signal further depends on a noise related quantity ($t_{eff}$).

9. An apparatus as claimed in claim 1, wherein said cross-luminance reduction filter control signal further depends on an amount of blackstretch (bs) applied to the luminance signal.

10. An apparatus as claimed in claim 1, wherein said cross-luminance reduction filter (35) only affects a small frequency region $Y_{sc}$ around a color subcarrier frequency $f_{sc}$.

11. A color-dependent method of reducing cross-luminance, comprising the steps of:

furnishing intra-frame averaged chrominance signal components ($U_{ifa}$, $V_{ifa}$) in dependence on chrominance signal components (U, V);
generating (3; 45) a saturation signal (S) in dependence upon said intra-frame averaged chrominance signal components ($U_{ifa}$, $V_{ifa}$);
furnishing (5; 57-61) a cross-luminance reduction filter control signal (YHred) in dependence upon said saturation signal (S); and
filtering a luminance signal ($Y_{in}$) in dependence on said cross-luminance reduction filter control signal to produce an output luminance signal ($Y_{out}$).

12. A television receiver comprising:

a decoder for decoding a received encoded television signal to produce decoded luminance and chrominance signals, and
display means for displaying a color image in response to said decoded luminance and chrominance signals, wherein said decoder includes a color-dependent cross-luminance reduction apparatus as claimed in claim 1.

**Revendications**

1. Appareil de réduction de la diaphotie de luminance dépendant des couleurs comprenant :

des moyens (63-69) couplés pour recevoir des composantes de signal de chrominance (U, V) pour fournir des composantes de signal de chrominance mises à la moyenne intra-image ($U_{ifa}$, $V_{ifa}$) ;
des moyens de détection de saturation (3, 45) couplés pour recevoir lesdites composantes de signal de chrominance mises à la moyenne intra-image ($U_{ifa}$, $V_{ifa}$) pour produire un signal de saturation (S) ;
des moyens (5, 57-61) pour fournir un signal de commande de filtre de réduction de la diaphotie de luminance (YHred) en fonction dudit signal de saturation (S), et
des moyens (1, 31, 35, 39) pour filtrer un signal de luminance ($Y_{in}$) en fonction dudit signal de commande de filtre de réduction de la diaphotie de luminance (YHred) pour produire un signal de luminance de sortie ($Y_{out}$).

2. Appareil suivant la revendication 1, dans lequel lesdits moyens de détection de saturation (45) comprennent des moyens (45) pour calculer une longueur (S) d'un vecteur de chrominance mise à la moyenne intra-image possédant comme composantes lesdites composantes de signal de chrominance mises à la moyenne intra-image ($U_{ifa}$, $V_{ifa}$).

3. Appareil suivant la revendication 1, dans lequel lesdits moyens de production de signal de commande de filtre de réduction de la diaphotie de luminance (57-61) comprennent :

des moyens (41-45, 51, 53) pour calculer un signal de commande de filtre adaptatif par mouvement de chrominance (M) en fonction desdites composantes de signal de chrominance mises à la moyenne intra-image ($U_{ifa}$, $V_{ifa}$), et
des moyens (47, 49, 57, 59, 61) pour combiner ledit signal de saturation (S) et ledit signal de commande de filtre adaptatif par mouvement de chrominance (M) pour obtenir ledit signal de commande de filtre de réduction de la diaphotie de luminance (YHred).

4. Appareil suivant la revendication 3, dans lequel lesdits moyens (41-45, 51, 53) pour calculer un signal de commande de filtre adaptatif par mouvement de chrominance (M) comprennent des moyens (41, 43, 51, 53, 45) pour calculer une longueur (M) d'un vecteur de différence de chrominance possédant comme composantes des différences respectives intra-image desdites composantes de signal de chrominance mises à la moyenne intra-image ($U_{ifa}$, $V_{ifa}$).

5. Appareil suivant la revendication 1, dans lequel lesdits moyens de filtrage de luminance (31, 35, 39) comprennent :

des moyens (31) pour séparer ledit signal de luminance ($Y_{in}$) en un signal de luminance de basse fréquence ($Y_L$) et en un signal de luminance de haute fréquence ($Y_H$) ;
des moyens (35) pour filtrer ledit signal de luminance de haute fréquence ($Y_H$) en réaction au dit signal de commande de filtre de réduction de la diaphotie de luminance pour obtenir un signal de luminance de haute fréquence filtré, et
des moyens (39) pour combiner ledit signal de luminance de basse fréquence ($Y_L$) et ledit signal de luminance de haute fréquence filtré pour produire un signal de luminance de sortie ($Y_{out}$).

6. Appareil suivant la revendication 5, dans lequel lesdits moyens de filtrage de signal de luminance de haute fréquence (35) comprennent des moyens (35) pour atténuer ledit signal de luminance de haute fréquence ($Y_H$) en fonction dudit signal de commande de filtre de réduction de la diaphotie de luminance.

7. Appareil suivant la revendication 1, dans lequel ledit signal de commande de filtre de réduction de la diaphotie de luminance dépend en outre d'une composante de basse fréquence $Y_L$ dudit signal de luminance Y.

8. Appareil suivant la revendication 1, dans lequel ledit signal de commande de filtre de réduction de la diaphotie de luminance dépend en outre d'une quantité liée au bruit ($t_{eff}$).

9. Appareil suivant la revendication 1, dans lequel ledit signal de commande de filtre de réduction de la diaphotie de luminance dépend en outre d'un volume d'étalement des noirs (bs) appliqué au signal de luminance.

10. Appareil suivant la revendication 1, dans lequel ledit filtre de réduction de la diaphotie de luminance (35) n'affecte qu'une faible zone de fréquence $Y_{sc}$ autour d'une fréquence de sous-porteuse de couleur $f_{sc}$.

11. Procédé de réduction de la diaphotie de luminance dépendant de la couleur, comprenant les étapes de:

fourniture des composantes de signal de chrominance mises à la moyenne intra-image ($U_{ifa}$, $V_{ifa}$) en fonction de composantes de signal de chrominance (U, V) ;
production (3, 45) d'un signal de saturation (S) en fonction desdites composantes de signal de chrominance mises à la moyenne intra-image ($U_{ifa}$, $V_{ifa}$) ;
fourniture (5, 57-61) d'un signal de commande de filtre de réduction de la diaphotie de luminance en fonction dudit signal de saturation (S), et
filtration d'un signal de luminance ($Y_{in}$) en fonction dudit signal de commande de filtre de réduction de la diaphotie de luminance pour produire un signal de luminance de sortie ($Y_{out}$).

12. Récepteur de télévision comprenant :

un décodeur pour décoder un signal de télévision codé reçu pour produire des signaux de luminance et de chrominance décodés, et
des moyens d'affichage pour afficher une image en couleur en fonction desdits signaux de luminance et de chrominance décodés,
dans lequel ledit décodeur inclut un appareil de réduction de la diaphotie de luminance suivant la revendication 1.

**Patentansprüche**

1. Farbenabhängige Leuchtdichteübersprechreduktionsanordnung mit:

- Mitteln (63 - 69), die Farbartsignalanteile (U, V) empfangen zum Liefern intraframegemittelter Farbartsignalanteile ($U_{ifa}$, $V_{ifa}$);
- Sättigungsdetektionsmitteln (3; 45) zum Empfangen der genannten intraframegemittelten Farbartsignalanteile ($U_{ifa}$, $V_{ifa}$) zum Erzeugen eines Sättigungssignals (S);
- Mitteln (5; 57 - 61) zum Liefern eines Leuchtdichteübersprechreduktionsfiltersteuersignals (YHred) in Abhängigkeit von dem genannten Sättigungssignal (S); und
- Mitteln (1; 31, 35, 39) zum Filtern eines Leuchtdichtesignals ($Y_{in}$) in Abhängigkeit von dem genannten Leuchtdichteübersprechreduktionsfiltersteuersignal (Yhred) zum Erzeugen eines Ausgangsleuchtdichtesignals ($Y_{out}$).

2. Anordnung nach Anspruch 1, wobei die genannten Sättigungsdetektionsmittel (45) Mittel (45) aufweisen zum Berechnen einer Länge (S) eines intraframegemittelten Farbartvektors mit den genannten intraframegemittelten Farbartanteilen ($U_{ifa}$, $V_{ifa}$) als Bestandteile.

3. Anordnung nach Anspruch 1, wobei die genannten das Leuchtdichteübersprechreduktionsfiltersteuersignal erhaltenen Mittel (57 - 61) die nachfolgenden Elemente aufweisen:

- Mittel (41 - 45, 51, 53) zum Berechnen eines farbartbewegungsadaptiven Filtersteuersignals (M) in Abhängigkeit von den genannten intraframegemittelten Farbartsignalanteilen ($U_{ifa}$, $V_{ifa}$); und
- Mittel (47, 49, 57, 59, 61) zum Kombinieren des genannten Sättigungssignals (S) und des genannten farbartbewegungsadaptiven Filtersteuersignals (M) zum Erhalten des genannten Leuchtdichteübersprechreduktionsfiltersteuersignals (YHred).

4. Anordnung nach Anspruch 3, wobei die genannten Mittel (41 - 45, 51, 53) zum Berechnen eines farbartbewegungsadaptiven Filtersteuersignals (M) Mittel (41, 43, 51, 53, 45) aufweisen zum berechnen einer Länge (M) eines Farbartdifferenzvektors mit betreffenden Intraframedifferenzen der genannten intraframegemittelten Farbartsignalanteilen ($U_{ifa}$, $V_{ifa}$) als seine Anteile.

5. Anordnung nach Anspruch 1, wobei die genannten Leuchtdichtefiltermittel (31, 35, 39) die nachfolgenden Elemente aufweisen:

- Mittel (31) zum Trennen des genannten Leuchtdichtesignals ($Y_{in}$) in ein NF-Leuchtdichtesignal (YL) und ein HF-Leuchtdichtesignal ($Y_H$);
- Mittel (35) zum Filtern des genannten HF-Leuchtdichtesignals ($Y_H$) in Abhängigkeit von dem genannten Leuchtdichteübersprechreduktionsfiltersteuersignal zum Erhalten eines gefilterten HF-Leuchtdichtesignals; und
- Mittel (39) zum Kombinieren des genannten NF-Leuchtdichtesignals ($Y_L$) und des genannten gefilterten HF-Leuchtdichtesignals zum Erzeugen eines Ausgangsleuchtdichtesignals ($Y_{out}$).

6. Anordnung nach Anspruch 5, wobei die genannten HF-Leuchtdichtesignalfiltermittel (35) Mittel (35) aufweisen zur Dämpfung des genannten HF-Leuchtdichtesignals ($Y_H$) in Abhängigkeit von dem genannten Leuchtdichteübersprechreduktionsfiltersteuersignal.

7. Anordnung nach Anspruch 1, wobei das genannte Leuchtdichteübersprechreduktionsfiltersteuersignal weiterhin abhängig ist von einem NF-Anteil $Y_L$ des genannten Leuchtdichtesignals Y.

8. Anordnung nach Anspruch 1, wobei das genannte Leuchtdichteübersprechreduktionsfiltersteuersignal weiterhin abhängig ist von einer rauschbezogenen Menge ($t_{eff}$).

9. Anordnung nach Anspruch 1, wobei das genannte Leuchtdichteübersprechreduktionsfiltersteuersignal weiterhin abhängig ist von einer Schwarzdehnung (bs), das dem Leuchtdichtesignal zugeführt wird.

10. Anordnung nach Anspruch 1, wobei das genannte Leuchtdichteübersprechreduktionsfilter (35) nur ein kleines Frequenzgebiet $Y_{sc}$ um eine Farbhilfsträgerfrequenz $f_{sc}$ herum beeinflusst.

11. Farbabhängiges Verfahren zum Reduzieren des Leuchtdichteübersprechens, wobei dieses Verfahren die nachfolgenden Verfahrensschritte umfasst:

- das Liefern von intraframegemittelten Farbartsignalanteilen ($U_{ifa}$, $V_{ifa}$) in Abhängigkeit von Farbartsignalanteilen (U, V);
- das Erzeugen (3; 45) eines Sättigungssignals (S) in Abhängigkeit von den genannten intraframegemittelten Farbartsignalanteilen ($U_{ifa}$, $V_{ifa}$);
- das Liefern (5; 57 - 61) eines Leuchtdichteübersprechreduktionsfiltersteuersignals (YHred) in Abhängigkeit von dem genannten Sättigungssignals (S); und
- das Filtern eines Leuchtdichtesignals ($Y_{in}$) in Abhängigkeit von dem genannten Leuchtdichteübersprechreduktionsfiltersteuersignal zum Erzeugen eines Ausgangsleuchtdichtesignals ($Y_{out}$).

12. Fernsehempfänger, mit:

- einem Decoder zum Decodieren eines empfangenen codierten Fernsehsignals zum Erzeugen decodierter Leuchtdichte- und Farbartsignale, und
- Wiedergabemitteln zum Wiedergeben eines Farbbildes in Reaktion auf die genannten decodierten Leuchtdichte- und Farbartsignale,
- wobei der genannte Decoder eine farbabhängige Leuchtdichteübersprechreduktionsanordnung nach Anspruch 1 aufweist.

FIG.1

FIG.2

FIG.3

FIG.4

FIG.5

FIG.6

FIG.7

FIG.8

FIG.9

14